# EUROPEAN PATENT SPECIFICATION

(11) **EP 2 536 602 B1**
(45) Date of publication and mention of the grant of the patent: **26.08.2015**
(21) Application number: 10705992.5
(22) Date of filing: 17.02.2010
(51) Int. Cl.: B60S 1/38

(54) **WINDSCREEN WIPER DEVICE**
SCHEIBENWISCHERVORRICHTUNG
DISPOSITIF D'ESSUIE-GLACE DE PARE-BRISE

(43) Date of publication of application: 26.12.2012
(73) Proprietor: Federal-Mogul S.A., 6790 Aubange (BE)
(72) Inventor: BOLAND, Xavier, B-6700 Arlon (BE)
(74) Representative: Hooiveld, Arjen Jan Winfried
(86) International application number: PCT/EP2010/051982
(87) International publication number: WO 2011/101028

(56) References cited:
- EP-A1- 2 090 479
- EP-A2- 2 123 524
- EP-A2- 2 127 969
- WO-A1-2008/069464
- DE-A1- 10 025 629
- DE-A1-102008 040 063
- US-A1- 2008 052 865

## Description

The invention relates to a windscreen wiper device comprising an elastic, elongated carrier element, as well as an elongated wiper blade of a flexible material, which can be placed in abutment with a windscreen to be wiped, which wiper blade includes a central longitudinal groove, in which groove a central longitudinal strip of the carrier element is disposed, wherein connecting pieces are provided at both ends of said wiper blade, which windscreen wiper device comprises a connecting device for an oscillating wiper arm.

Such a windscreen wiper device is generally known. This prior art windscreen wiper device is designed as a so-called "flat blade" or "yokeless blade", wherein no use is made of several yokes pivotally connected to each other, but wherein the wiper blade is biassed by the carrier element, as a result of which it exhibits a specific curvature. A disadvantage of this known wiper device is that dust and water can get into the central longitudinal groove, because of which the strip cannot move freely in the groove and because of which corrosion of the strip can occur.
WO-A-2008/069464 shows the preamble of claim 1.
The object of the invention is to overcome this drawback of the prior art as indicated above, in particular to provide a windscreen wiper device wherein the connecting pieces ("end caps") prevent dust and water from getting into the longitudinal groove.

In order to accomplish that objective, a windscreen wiper device of the kind referred to in the introduction according to the invention comprises a wiper blade with an elongated upper holding part and an elongated lower wiping part of a flexible material, wherein said holding part holds said wiping part, wherein said holding part comprises downwardly extending side arms, seen in cross-section, for holding said wiping part, from the outside in a lateral region thereof, wherein the connecting pieces comprise engaging members that sidewardly engage said upper holding part, and wherein said engaging members comprise legs extending laterally from said engaging members over the length thereof in the direction of said downwardly extending side arms, wherein said wiper device comprises retaining means for retaining said connecting pieces onto said wiper blade, wherein said retaining means comprise at least one protrusion extending from said legs in the direction of said downwardly extending side arms, and wherein said holding part is provided with an elongated reinforcement element, characterized in that said reinforcement element is provided with spaced-apart profiles extending in transverse and longitudinal directions, and wherein said protrusion extends in an opening formed by said spaced-apart profiles. Because said connecting pieced are connected to the wiper blade without any connection between said connecting pieces and said strip, the connecting pieces close the groove in a dust tight and watertight manner. This implies that any decrease in mobility between the wiper blade and the strip due to any dust inside the groove is avoided, whereas any corrosion of the strip due to any (rain) water inside the groove is avoided as well.

Said protrusions realize that the connecting pieces are blocked against any movement in longitudinal direction with respect to the wiper blade.

In another preferred embodiment of a windscreen wiper device in accordance with the invention said wiper blade and said groove are longer than said strip at both ends of said wiper blade thus forming a space, wherein said connecting piece comprise an interior protrusion fitting inside said space in order to dust and water tightly close said groove at both ends of said wiper blade. Particularly by slidingly mounting said connecting pieces over the respective free ends of said wiper blade, said interior protrusions are slided in the respective spaces of said wiper blade. Preferably, said interior protrusion extends longitudinally from an end wall of each connecting piece.

In another preferred embodiment of a windscreen wiper device in accordance with the invention said strip is provided with a lubricant. Said lubricant reduces the friction of the strip in the groove. Because said groove is closed in a dust tight and watertight manner, said lubricant will stay in said groove, thereby maintaining said reduced friction. This particularly achieved when said space is closed by said interior protrusion. Preferably, said lubricant is a powder, more said lubricant is chosen from the group consisting of talc, sulfur and graphite.

In another preferred embodiment of a windscreen wiper device in accordance with the invention said holding part is provided with a spoiler at a side thereof facing away from said wiping part.

The invention will now be explained in more detail with reference to figures illustrated in a drawing, wherein:
- Figure 1 is a perspective 7 schematic view of a preferred embodiment of a windscreen wiper device according to the invention;
- Figures 2 is a cross-section of the windscreen wiper device of figure 1;
- Figure 3 is a perspective view of a reinforcement element of the windscreen wiper device of figure 1;
- Figure 4 is a detailed view of a connecting piece according to the invention;
- Figure 5 is a detailed view of the connecting piece mounted on the windscreen wiper device according to the invention;
- Figure 6 is cross-section in the horizontal plane of the connecting piece mounted on the windscreen wiper device according to the invention;
- Figure 7 is longitudinal cross-section in the vertical plane of the connecting piece mounted on the windscreen wiper device according to the invention.

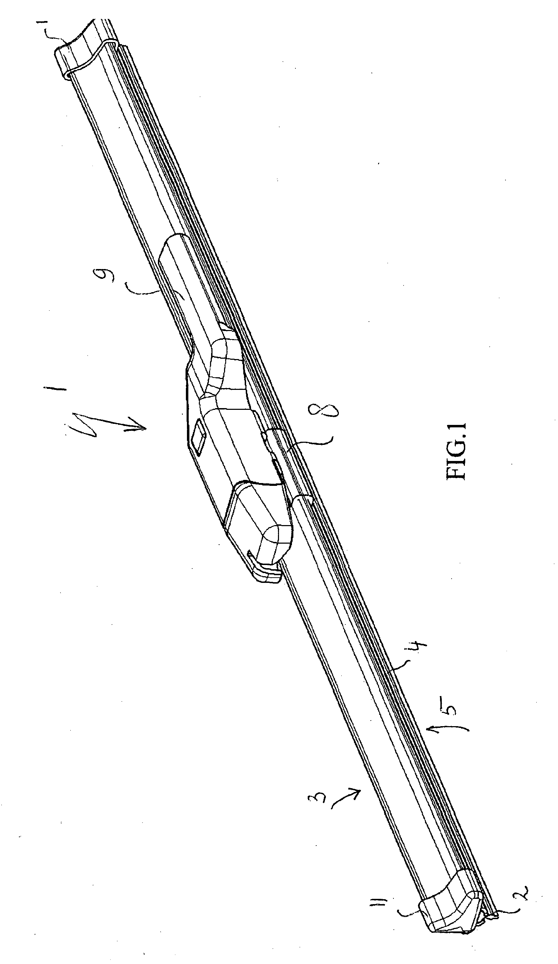

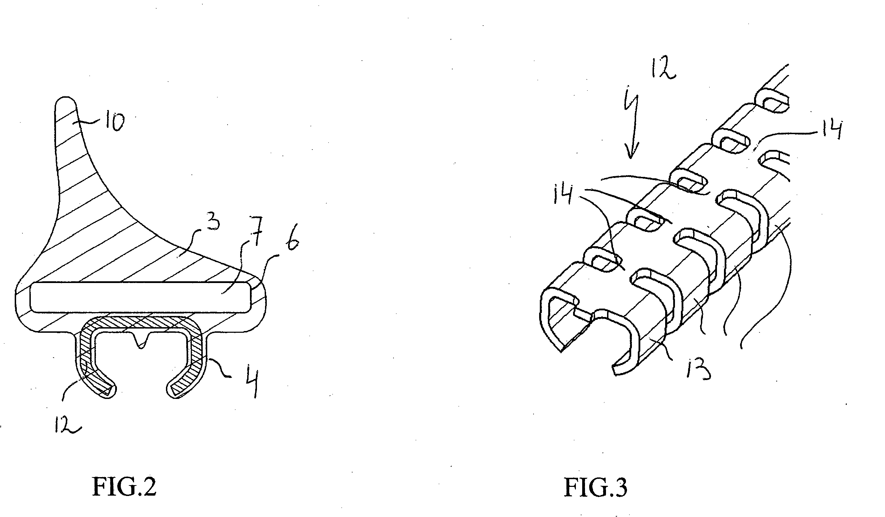

Figure 1 shows a preferred variant of a windscreen wiper device 1 according to the invention. Said windscreen wiper device 1 is built up of a wiper blade 2 consisting of a rubber or plastic elongated upper holding part 3 with downwardly extending side arms 4 holding an elastomeric elongated lower wiping part 5, wherein upper holding part 3 and lower wiping part 5 extend in longitudinal direction along the entire length of said wiper blade 2. In the holding part 3 a central longitudinal groove 6 is formed, in which a longitudinal strip 7 made of spring band steel is fitted (figure 2). Said strip 7 forms a flexible carrier element for the rubber wiper blade 2, as it were, which is thus biased in a curved position (the curvature in operative position being that of a windscreen to be wiped).
The windscreen wiper device 1 is further equipped with a connecting device 8 for an oscillating arm 9, and a spoiler 10. At both ends of said wiper blade 2, that is on either side of the windscreen wiper device 1, connecting pieces 11 are provided. Upper holding part 3 is further provided with a reinforcement element 12 of metal. Said reinforcement element 12 extending in longitudinal direction along the entire length of said holding part 3 has a bending stiffness in transverse direction and is flexible in longitudinal direction. This is realized by providing said reinforcement element 12 with profiles 13 having a C-shaped cross-section (figure 2) spaced-apart by spacers 14 and extending in transverse and longitudinal directions. Said reinforcement element 12 enhances the stiffness of said holding part 3 in transverse direction, allowing said holding part 3 to firmly retain said wiping part 5 thereon. Simultaneously, said reinforcement element 12 is flexible enough to follow any bending of said longitudinal strip 7 along the curvature of the windscreen to be wiped. Accordingly, said reinforcement element 12 incorporates two features which at first sight appear to be incompatible, namely having a bending stiffness in transverse direction and having flexibility in longitudinal direction. This is particularly achieved by said profiles 13 put at a distance from each other.

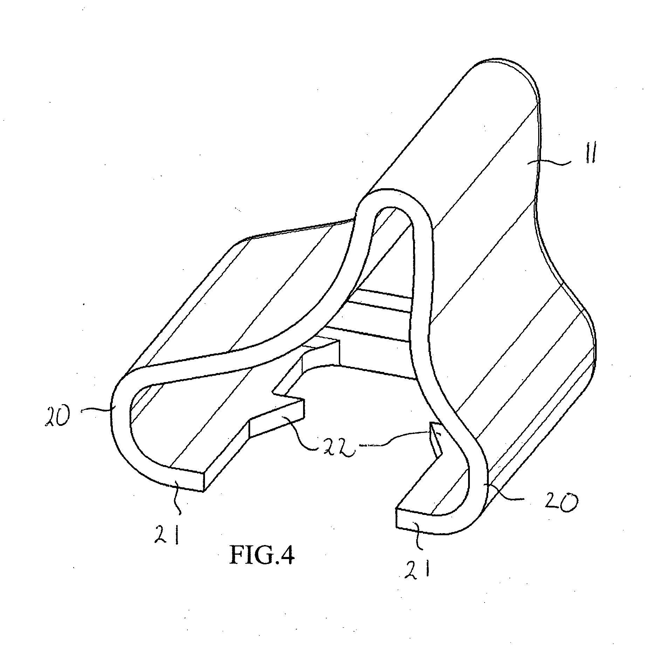

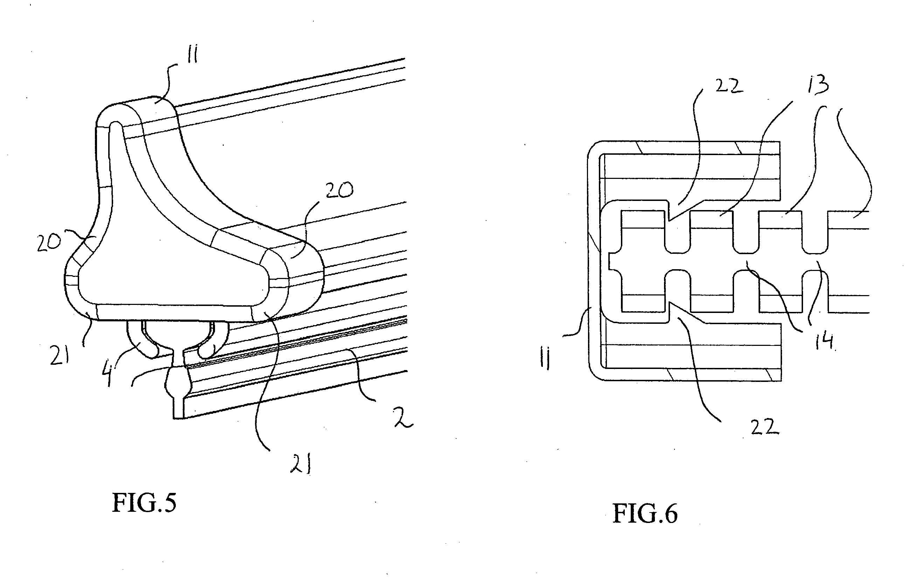

With reference to figures 4 through 6, each connecting piece 11 is provided with two engaging members 20 made integral therewith, wherein said engaging members 10 engage around said upper holding part 3. Said engaging members 20 comprise legs 21 made integral therewith extending laterally from said engaging members 20 over the length thereof in the direction of said downwardly extending side arms 4 of upper holding part 3. Connecting piece 11 can be slidingly mounted of over said ends of said wiper blade 2. Further, said legs 21 comprise protrusions 22 made integral therewith extending from said legs 21 in the direction of said downwardly extending side arms 4 of upper holding part 3, wherein said protrusions 22 in mounted position extend in the rubber of wiper blade 2 in the openings 23 formed by C-shaped profile 13 and spacer 14. Hence, said protrusions 22 realize that the connecting pieces 11 are blocked against any movement in longitudinal direction with respect to the wiper blade 2. It is noted that the protrusions 22 only slightly penetrates the elastomeric (rubber) or plastic material of said wiper blade 2, without damaging the same.

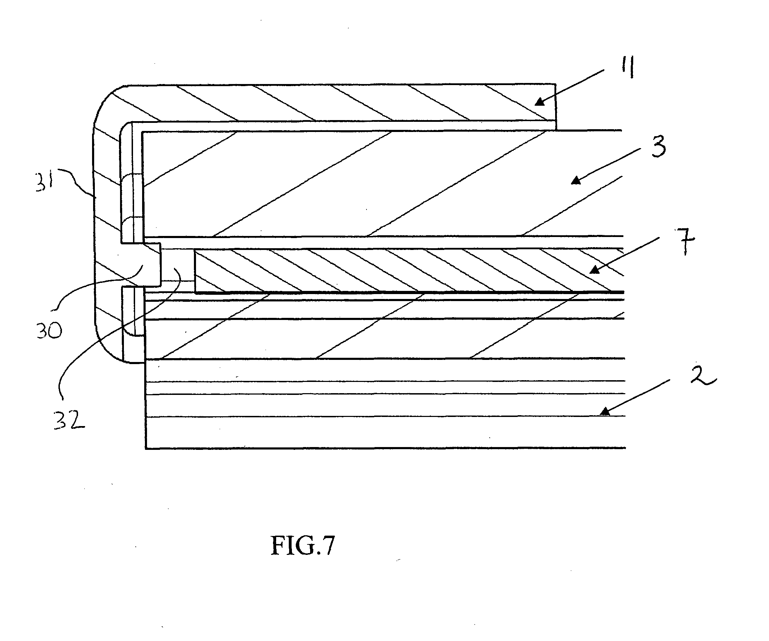

With reference to figure 7, said connecting pieces 11 are each provided with a finger or protrusion 30 extending in longitudinal and inward direction from the end wall 31 thereof. When a connecting piece 11 is slidably mounted over a free end of the wiper blade 2, the protrusion 30 slides inside a blind hole 32 of the wiper blade 2. Said blind hole 32 is formed if the wiper blade 2 and the groove 6 are longer than the strip 7. Preferably, said strip 7 is provided with a lubricant, in particular a powder such as talc, in order to reduce friction of the strip 7 in the groove 6. In particular when said blind hole 31 is closed by said protrusion 30, said lubricant will stay in said groove 6, thereby maintaining reduced friction.

According to the invention the connecting pieces 11 or "end caps" are connected to the wiper blade 2 without any connection between said connecting pieces 11 and the strip 7.

Although not depicted in the figures, it will be clear for a person skilled in the art that the oscillating wiper arm 9 is connected to a mounting head fixed for rotation to a shaft driven by a small motor. In use, the shaft rotates alternately in a clockwise and in a counter-clockwise sense currying the mounting head into rotation also, which in turn draws the oscillating wiper arm 9 into rotation and by means of the connecting device 8 moves the wiper blade 2.

The present invention is not limited to the embodiment shown, but extends also to other embodiments falling within the scope of the appended claims.

## Claims

1. A windscreen wiper device (1) comprising an elastic, elongated carrier element, as well as an elongated wiper blade (2) of a flexible material, which can be placed in abutment with a windscreen to be wiped, which wiper blade (2) includes a central longitudinal groove (6), in which groove a central longitudinal strip (7) of the carrier element is disposed, wherein connecting pieces (11) are provided at both ends of said wiper blade (2), which windscreen wiper device comprises a connecting device (8) for an oscillating wiper arm (9), wherein said wiper blade (2) comprises an elongated upper holding part (3) and an elongated lower wiping part (5) of a flexible material, wherein said holding part (3) holds said wiping part (5), wherein said holding part (3) comprises downwardly extending side arms (4), seen in cross-section, for holding said wiping part (5), from the outside in a lateral region thereof, wherein the connecting pieces (11) comprise engaging members (20) that sidewardly engage said upper holding part (3), and wherein said engaging members (20) comprise legs (21) extending laterally from said engaging members (20) over the length thereof in the direction of said downwardly extending side arms (4), wherein said wiper device (1) comprises retaining means for retaining said connecting pieces (11) onto said wiper blade (2), wherein said retaining means comprise at least one protrusion (22) extending from said legs (21) in the direction of said downwardly extending side arms (4), wherein said holding part (3) is provided with an elongated reinforcement element (12), **characterized in that** said reinforcement element (12) is provided with spaced-apart profiles (13) extending in transverse and longitudinal directions, and wherein said protrusion (22) extends in an opening (23) formed by said spaced-apart profiles (13).

2. A windscreen wiper device according to claim 1, wherein said wiper blade (2) and said groove (6) are longer than said strip (7) at both ends of said wiper blade (2) thus forming a space (32), wherein said connecting pieces (11) comprise an interior protrusion (30) fitting inside said space (32) in order to dust and water tightly close said groove (6) at both ends of said wiper blade (2).

3. A windscreen wiper device according to claim 2, wherein said interior protrusion (30) extends longitudinally from an end wall (31) of each connecting piece (11).

4. A windscreen wiper device according to claim 1, 2 or 3, wherein said strip (7) is provided with a lubricant.

5. A windscreen wiper device according to claim 4, wherein said lubricant is a powder.

6. A windscreen wiper device according to claim 4 or 5, wherein said lubricant is chosen from the group consisting of talc, sulfur and graphite.

7. A windscreen wiper device according to any of the preceding claims 1 - 6, wherein said holding part (3) is provided with a spoiler (10) at a side thereof facing away from said wiping part (5).

## Patentansprüche

1. Scheibenwischervorrichtung (1), umfassend ein elastisches, längliches Trägerelement sowie ein längliches Wischerblatt (2) aus einem flexiblen Material, das an einer zu wischenden Windschutzscheibe anliegend angeordnet werden kann, wobei das Wischerblatt (2) eine mittlere Längsrille (6) umfasst, wobei in der Rille (3) ein mittlerer Längsstreifen (7) des Trägerelements angeordnet ist, wobei Verbindungsstücke (11) an beiden Enden des Wischerblatts (2) vorgesehen sind, wobei die Scheibenwischervorrichtung eine Verbindungsvorrichtung (8) für einen sich hin und her bewegenden Wischerarm (9) umfasst, wobei das Wischerblatt (2) ein längliches oberes Halteteil (3) und einen länglichen unteren Wischteil (5) aus einem flexiblen Material umfasst, wobei das Halteteil (3) den Wischteil (5) hält, wobei das Halteteil (3) sich nach unten erstreckende Seitenarme (4) umfasst, betrachtet im Querschnitt, um das Wischteil (5) zu halten, von der Außenseite in einem seitlichen Bereich davon, wobei die Verbindungsstücke (11) Greifelemente (20) umfassen, die seitlich mit dem oberen Halteteil (3) in Eingriff stehen, und wobei die Greifelemente (20) Schenkel (21) umfassen, die sich von den Greifelementen (20) seitlich über die Länge davon in der Richtung der sich nach unten erstreckenden Seitenarme (4) erstrecken, wobei die Wischervorrichtung (1) Festhaltemittel umfasst, um die Verbindungsstücke (11) auf dem Wischerblatt (2) festzuhalten, wobei die Festhaltemittel mindestens einen Vorsprung (22) umfassen, der sich von den Schenkeln (21) in der Richtung der sich nach unten erstreckenden Seitenarme (4) erstreckt, wobei das Halteteil (3) mit einem länglichen Verstärkungselement (12) versehen ist,
**dadurch gekennzeichnet, dass**
das Verstärkungselement (12) mit beabstandeten Profilen (13) versehen ist, die sich in Quer- und Längsrichtung erstrecken, und wobei der Vorsprung (22) sich in eine Öffnung (23) erstreckt, die von den beabstandeten Profilen (13) gebildet wird.

2. Scheibenwischervorrichtung (1) nach Anspruch 1, wobei das Wischerblatt (2) und die Rille (6) an beiden Enden des Wischerblatts (2) länger als der Streifen (7) sind, wodurch ein Raum (32) gebildet wird, wobei die Verbindungsstücke (11) einen inneren Vorsprung (30) umfassen, der in den Raum (32) passt, um die Rille (6) an beiden Enden des Wischerblatts (2) gegenüber Staub und Wasser dicht zu verschließen.

3. Scheibenwischervorrichtung (1) nach Anspruch 2, wobei der innere Vorsprung (30) sich längs von einer Endwand (31) jedes Verbindungsstücks (11) erstreckt.

4. Scheibenwischervorrichtung (1) nach Anspruch 1, 2 oder 3, wobei der Streifen (7) mit einem Schmiermittel versehen ist.

5. Scheibenwischervorrichtung (1) nach Anspruch 4, wobei das Schmiermittel ein Pulver ist.

6. Scheibenwischervorrichtung (1) nach Anspruch 4 oder 5, wobei das Schmiermittel aus der Gruppe bestehend aus Talk, Schwefel und Graphit ausgewählt ist.

7. Scheibenwischervorrichtung (1) nach einem der vorhergehenden Ansprüche 1 bis 6, wobei das Halteteil (3) an einer Seite davon, die von dem Wischteil (5) weg weist, mit einem Spoiler (10) versehen ist.

## Revendications

1. Dispositif d'essuie-glace (1) comprenant un élément de support allongé élastique, ainsi qu'un balai d'essuie-glace allongé (2) réalisé avec un matériau flexible, qui peut être placé en butée contre un pare-brise à essuyer, lequel balai d'essuie-glace (2) comprend une rainure longitudinale centrale (6), dans laquelle rainure, on dispose une bande longitudinale centrale (7) de l'élément de support, dans lequel des pièces de raccordement (11) sont prévues aux deux extrémités dudit balai d'essuie-glace (2), lequel dispositif d'essuie-glace comprend un dispositif de raccordement (8) pour un bras d'essuie-glace oscillant (9), dans lequel ledit balai d'essuie-glace (2) comprend une partie de maintien supérieure allongée (3) et une partie d'essuyage inférieure allongée (5) réalisée avec un matériau flexible, dans lequel ladite partie de maintien (3) maintient ladite partie d'essuyage (5), dans lequel ladite partie de maintien (3) comprend des bras latéraux s'étendant vers le bas (4), observés en coupe, pour maintenir ladite partie d'essuyage (5), depuis l'extérieur dans sa région latérale, dans lequel les pièces de raccordement (11) comprennent des éléments de mise en prise (20) qui mettent en prise latéralement ladite partie de maintien supérieure (3), et dans lequel lesdits éléments de mise en prise (20) comprennent des pattes (21) s'étendant latéralement à partir desdits éléments de mise en prise (20) sur leur longueur dans la direction desdits bras latéraux s'étendant vers le bas (4), dans lequel ledit dispositif d'essuie-glace (1) comprend des moyens de retenue pour retenir lesdites pièces de raccordement (11) sur ledit balai d'essuie-glace (2), dans lequel lesdits moyens de retenue comprennent au moins une saillie (22) s'étendant à partir desdites pattes (21) dans la direction desdits bras latéraux s'étendant vers le bas (4), dans lequel ladite partie de maintien (3) est prévue avec un élément de renforcement allongé (12), **caractérisé en ce que** ledit élément de renforcement (12) est prévu avec des profils (13) espacés s'étendant dans les directions transversale et longitudinale, et dans lequel ladite saillie (22) s'étend dans une ouverture (23) formée par lesdits profils (13) espacés.

2. Dispositif d'essuie-glace selon la revendication 1, dans lequel ledit balai d'essuie-glace (2) et ladite rainure (6) sont plus longs que ladite bande (7) aux deux extrémités dudit balai d'essuie-glace (2) formant ainsi un espace (32), dans lequel lesdites pièces de raccordement (11) comprennent une saillie intérieure (30) s'ajustant à l'intérieur dudit espace (32) afin de fermer, de manière étanche à la poussière et à l'eau, ladite rainure (6) aux deux extrémités dudit balai d'essuie-glace (2).

3. Dispositif d'essuie-glace selon la revendication 2, dans lequel ladite saillie intérieure (30) s'étend longitudinalement à partir d'une paroi d'extrémité (31) de chaque pièce de raccordement (11).

4. Dispositif d'essuie-glace selon les revendications 1, 2 ou 3, dans lequel ladite bande (7) est prévue avec un lubrifiant.

5. Dispositif d'essuie-glace selon la revendication 4, dans lequel ledit lubrifiant est une poudre.

6. Dispositif d'essuie-glace selon les revendications 4 ou 5, dans lequel ledit lubrifiant est choisi dans le groupe comprenant le talc, le soufre et le graphite.

7. Dispositif d'essuie-glace selon l'une quelconque des revendications 1 à 6, dans lequel ladite partie de maintien (3) est prévue avec un déflecteur (10) au niveau de son côté opposé à ladite partie d'essuyage (5).
